# EUROPEAN PATENT APPLICATION

(11) **EP 1 903 193 A1**
(43) Date of publication of application: **26.03.2008**
(21) Application number: 06780986.3
(22) Date of filing: 05.07.2006
(51) Int. Cl.: F01P 7/16, F01P 3/20, F02N 17/06

(54) **ENGINE COOLER**

(30) Priority: 08.07.2005 JP 2005200323
(71) Applicant: TOYOTA JIDOSHA KABUSHIKI KAISHA, Toyota-shi, Aichi-ken, 471-8571 (JP)
(72) Inventor: SUZUKI, Takashi, TOYOTA JIDOSHA KABUSHIKI KAISHA, Toyota-shi, Aichi 4718571 (JP)
(74) Representative: TBK-Patent
(86) International application number: PCT/JP2006/313816
(87) International publication number: WO 2007/007775

(57) **Abstract**

An ECU executes a program including a step of, if an engine is not in a cold state (NO in S 100), controlling electric power to be supplied to an electric water pump such that a flow rate requested at the engine is obtained (S108), a step of, if the engine is in the cold state (YES in S 100) and a heater is not requested to operate (NO in S 102), providing control such that the electric water pump is stopped (S 104), and a step of, if the engine is in the cold state (YES in S 100) and the heater is requested to operate (YES in S 102), controlling the electric power to be supplied to the electric water pump such that the flow rate is set to the highest one of the flow rate requested at the engine, a flow rate requested at a heater core, and a flow rate requested at an exhaust heat recovery device (S 106).

## Description

### Technical Field

The present invention relates to a cooling device for an engine, and particularly relates to control of a flow rate of a cooling medium for the engine at cold start.

### Background Art

There has conventionally been known a water-cooled engine. A cooling medium (cooling water) that has cooled the engine is brought into heat exchange with air at a radiator or a heater in an air conditioner. The air warmed at the heater through heat exchange with the cooling water is utilized for heating of a vehicle chamber. Accordingly, in order to promptly heat the vehicle chamber after the engine start, the engine is promptly warmed up to raise a temperature of the cooling medium. Furthermore, there has been known a technique of recovering thermal energy of exhaust gas emitted from the engine of a motor vehicle. For example, there has been proposed a technique of an exhaust heat recovery system, in which an exhaust heat recovery device (e.g. heat exchanger) is installed in an exhaust system of a motor vehicle to absorb thereby thermal energy in exhaust gas to utilize the same for heating, warming up of the engine, and the like.

For example, Japanese Patent Laying-Open No. 63-120814 discloses an engine cooling system that suppresses deterioration in fuel economy and decrease in heater efficiency. This engine cooling system has means for controlling a heat exchanger that provides heat of exhaust gas of an internal combustion engine to cooling water, and controlling inflow of the exhaust gas into the heat exchanger, means for detecting a temperature of the cooling water and controllably mixing high-temperature cooling water and low-temperature cooling water to allow the cooling water at an arbitrarily-set temperature to flow into the internal combustion engine, a hydraulically-driven water pump unit that detects the temperature of the cooling water and delivers an arbitrary flow rate of cooling water to the internal combustion engine, a hydraulically-driven fan that delivers an arbitrary flow rate of cooling wind to a radiator, and a control unit that has means for switching between a cooling water circuit and a blower channel for releasing a part of heat released from the internal combustion engine to outside the vehicle through a radiator designed for a heater, and comprehensively controls the means in a related manner.

In the engine cooling system disclosed in the above-described document, the water pump rotates at a minimum number of revolutions immediately after the engine start. When the cooling medium for the engine is at a low temperature and the heater merely provides insufficient performance, exhaust gas is introduced into the heat exchanger to recover heat of the exhaust gas. When a switch of the heater is turned on in the case where the cooling medium is at a low temperature, the water pump rotates at a maximum number of revolutions, so that the heat recovered from the exhaust gas raises a temperature of the cooling water. Accordingly, decrease in heater efficiency is suppressed.

However, assume the case where the water pump is rotated at a maximum number of revolutions when the heater is requested to operate, as in the engine cooling system disclosed in the above-described document. The low-temperature cooling medium flows after cold start, and hence thermal energy generated by combustion of the engine is transmitted to the flowing cooling medium. Accordingly, there arises a problem of difficulty in raising a temperature of the engine. The engine at a low temperature causes unstable combustion, which may deteriorate fuel economy. In contrast, assume the case where the water pump is stopped or rotated at a minimum number of revolutions, when the heater is requested to operate, to place high priority on warming up of the engine. A temperature of the cooling medium in the heater core is difficult to rise, which may fail to ensure heater performance.

Furthermore, a flow rate produced by the water pump is not proportional to heat exchange efficiency at the exhaust heat recovery device. Accordingly, if the water pump is driven by an electric motor, for example, in the case where the water pump is to be rotated at a maximum number of revolutions, fuel economy may be deteriorated owing to increase in power consumption or the like.

### Disclosure of the Invention

An object of the present invention is to provide a cooling device for an engine, which cooling device simultaneously suppresses deterioration in fuel economy of the engine, and provides an efficient flow rate of a cooling medium for the engine at a heat exchanger through which the cooling medium flows.

A cooling device for an engine according to an aspect of the present invention is a cooling device adjusting a temperature of the engine. The engine is provided with a medium path allowing a cooling medium to flow therethrough. The medium path is connected to a heat exchanger causing heat exchange with the cooling medium. The cooling device includes a circulation unit circulating the cooling medium by receiving supply of electric power, and a control unit controlling the electric power to be supplied to the circulation unit. The control unit includes a setting unit setting a flow rate of the cooling medium to a set flow rate, in a cold state of the engine, based on a relation between heat exchange efficiency at the heat exchanger and the electric power at the circulation unit, the electric power corresponding to the flow rate, and an electric power control unit controlling the electric power such that the set flow rate is obtained.

According to the present invention, the setting unit sets the flow rate of the cooling medium to the set flow rate, in the cold state of the engine, based on the relation between heat exchange efficiency at the heat exchanger (e.g. exhaust heat recovery device) and the electric power at the circulation unit (e.g. electric water pump), the electric power corresponding to the flow rate of the cooling medium. The control unit controls the electric power such that the set flow rate is obtained. The setting unit sets the flow rate to a flow rate capable of ensuring required heat exchange efficiency while suppressing increase in power consumption, based on, for example, the relation between heat exchange efficiency and the electric power. It is thereby possible to suppress deterioration in fuel economy due to increase in power consumption, and suppress performance deterioration of the heat exchanger due to deterioration in heat exchange efficiency caused by an insufficient flow rate. Accordingly, it is possible to provide a cooling device for an engine, which cooling device simultaneously suppresses deterioration in fuel economy of the engine, and provides an efficient flow rate of a cooling medium for the engine at the heat exchanger through which the cooling medium flows.

A cooling device for an engine according to another aspect of the present invention is a cooling device adjusting a temperature of the engine. The engine is provided with a medium path allowing a cooling medium to flow therethrough. The medium path is connected to an exhaust heat recovery device provided at an exhaust manifold of the engine for recovering exhaust heat through heat exchange between exhaust gas of the engine and the cooling medium. The cooling device includes a circulation unit circulating the cooling medium by receiving supply of electric power, and a control unit controlling the electric power to be supplied to the circulation unit. The control unit includes a setting unit setting a flow rate of the cooling medium to a set flow rate, in a cold state of the engine, based on a relation between heat exchange efficiency at the exhaust heat recovery device and the electric power at the circulation unit, the electric power corresponding to the flow rate, and an electric power control unit controlling the electric power such that the set flow rate is obtained.

According to the present invention, the setting unit sets the flow rate of the cooling medium to the set flow rate, in the cold state of the engine, based on the relation between heat exchange efficiency at the exhaust heat recovery device and the electric power at the circulation unit (e.g. electric water pump), the electric power corresponding to the flow rate of the cooling medium. The control unit controls the electric power such that the set flow rate is obtained. The setting unit sets the flow rate to a flow rate capable of, for example, ensuring heat exchange efficiency required at the exhaust heat recovery device, while suppressing increase in power consumption, based on the relation between heat exchange efficiency at the exhaust heat recovery device and the electric power at the electric water pump. It is thereby possible to suppress deterioration in fuel economy due to increase in power consumption, and suppress performance deterioration of the exhaust heat recovery device due to deterioration in heat exchange efficiency caused by an insufficient flow rate. Accordingly, it is possible to provide a cooling device for an engine, which cooling device simultaneously suppresses deterioration in fuel economy of the engine, and provides an efficient flow rate of a cooling medium for the engine at the heat exchanger through which the cooling medium flows.

A cooling device for an engine according to still another aspect of the present invention is a cooling device adjusting a temperature of the engine. The engine is provided with a medium path allowing a cooling medium to flow therethrough. The medium path is connected to an exhaust heat recovery device provided at an exhaust manifold of the engine for recovering exhaust heat through heat exchange between exhaust gas of the engine and the cooling medium. The cooling device includes a circulation unit circulating the cooling medium, and a control unit for controlling a flow rate of the cooling medium circulated by the circulation unit. The control unit includes a setting unit setting the flow rate to a set flow rate, in a cold state of the engine, based on a comparison result between a warm-up state of the engine and an exhaust heat recovery state of the exhaust heat recovery device, and a flow rate control unit controlling the flow rate such that the set flow rate is obtained.

According to the present invention, the setting unit sets the flow rate to the set flow rate, in the cold state of the engine, based on the comparison result between the warm-up state of the engine (e.g. the temperature of the engine itself), and the exhaust heat recovery state of the exhaust heat recovery device (e.g. an amount of heat recovered when the engine rotates at an idle revolution number). The control unit controls the flow rate such that the set flow rate is obtained. It is determined, for example, whether warming up of the engine or exhaust heat recovery is more advantageous in terms of efficiency or fuel economy, based on the relation between the temperature of the engine itself in the cold state of the engine and the amount of recovered heat. In the case where warming up of the engine is determined to be more advantageous, when a flow of the cooling medium is stopped, for example, the temperature of the engine itself is promptly raised. Alternatively, in the case where exhaust heat recovery is determined to be more advantageous, when the cooling medium is allowed to flow at a flow rate that enables efficient exhaust heat recovery (e.g. a flow rate capable of ensuring required heat exchange efficiency while suppressing increase in power consumption based on a relation between heat exchange efficiency and the electric power), for example, the temperature of the cooling medium can be raised efficiently. The flow rate is therefore set in accordance with the warm-up state of the engine and the exhaust heat recovery state, which enables efficient warming up. Accordingly, it is possible to provide a cooling device for an engine, which cooling device simultaneously suppresses deterioration in fuel economy of the engine, and provides an efficient flow rate of a cooling medium for the engine at the heat exchanger through which the cooling medium flows.

Preferably, the medium path is connected to a heater core causing heat exchange between air in a vehicle chamber and the cooling medium. If a heater is requested to operate, the control unit sets the flow rate to the higher one of a flow rate requested at the heater core and a flow rate requested in the cold state of the engine.

According to the present invention, when the heater is requested to operate, the flow rate is set to the higher one of the flow rate requested at the heater core (e.g. a minimum flow rate that satisfies heater performance requirements) and the flow rate requested in the cold state of the engine (e.g. the flow rate requested at the engine and the flow rate requested at the exhaust heat recovery device). If the heater is requested to operate, the flow rate is set to at least a minimum flow rate that satisfies heater performance requirements, so that it is possible to encourage warming up of the engine while suppressing deterioration in heater performance.

Preferably, the control unit controls the flow rate such that the cooling medium is prevented from circulating through the medium path until a predetermined period of time passes after the heater is requested to operate.

According to the present invention, after cold start of the engine, the flow rate is controlled such that the cooling medium is prevented from circulating through the medium path until the predetermined period of time passes after the heater is requested to operate, so that the temperature of the engine itself can be raised. It is therefore possible to place high priority on warming up of the engine until the predetermined period of time passes after the heater is requested to operate. Accordingly, it is possible to promptly raise the temperature of the engine itself, and hence suppress deterioration in fuel economy.

Preferably, if the engine is not in the cold state, the setting unit sets the flow rate to a flow rate requested in accordance with an operation of the engine.

According to the present invention, if the engine is not in the cold state, the setting unit sets the flow rate to the flow rate requested in accordance with the operation of the engine. It is thereby possible to properly maintain the temperature of the engine.

### Brief Description of the Drawings

Fig. 1 is a diagram showing a configuration of a cooling device for an engine according to a first embodiment.
Fig. 2 is a diagram showing a configuration of an exhaust heat recovery device.
Fig. 3 is a diagram showing a relation between heat exchange efficiency and a flow rate of a cooling medium at the exhaust heat recovery device.
Fig. 4 is a flowchart showing a control structure of a program executed by an ECU in the first embodiment.
Fig. 5 is a flowchart showing a control structure of the program executed by the ECU in a second embodiment.
Fig. 6 is a flowchart showing a control structure of the program executed by the ECU in a third embodiment.

### Best Modes for Carrying Out the Invention

Embodiments of the present invention will hereinafter be described with reference to the drawings. In the following description, the same parts are provided with the same reference characters, and have the same names and functions. Accordingly, the detailed description thereof will not be repeated.

### <First Embodiment>

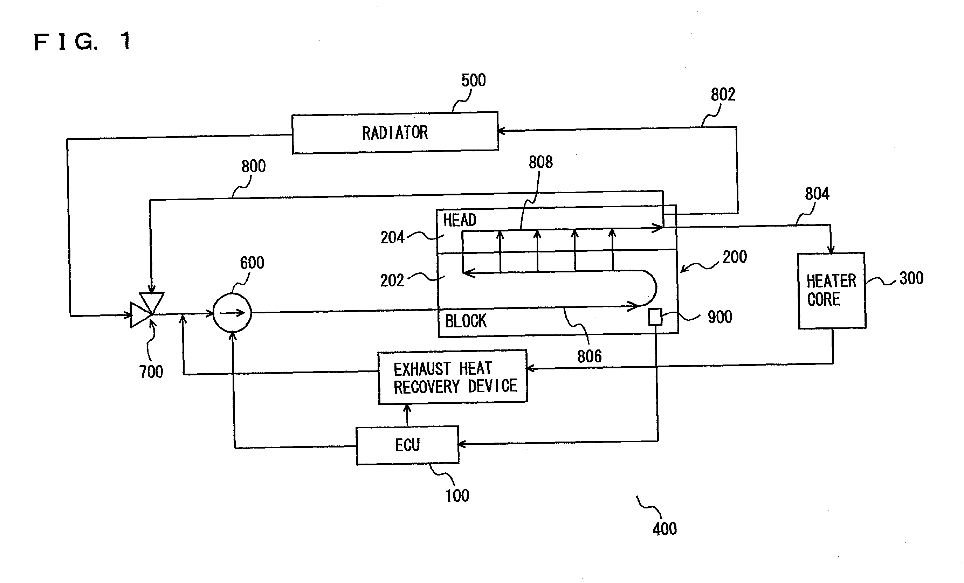

Referring to Fig. 1, a cooling device for an engine according to the present embodiment will be described. The cooling device for the engine according to the present embodiment is mounted on a vehicle, for example, and includes an Electronic Control Unit (ECU) 100, medium paths 806 and 808 provided at an engine 200, a heater core 300, an exhaust heat recovery device 400, a radiator 500, an electric water pump 600, and a thermostat 700. Engine 200 includes a cylinder block 202, and a cylinder head 204 disposed on cylinder block 202. Cylinder block 202 is provided with medium path 806, while cylinder head 204 is provided with medium path 808.

A cooling medium is supplied to engine 200 from electric water pump 600. In the present embodiment, the cooling medium refers to, for example, cooling water (i.e. coolant). However, the cooling medium is not particularly limited thereto. For example, the cooling medium may be gaseous. It is to be noted that, in the following description, the cooling medium is also referred to as cooling water.

When the cooling water supplied to engine 200 flows through medium path 806 in cylinder block 202 and medium path 808 in cylinder head 204, it initially flows through cylinder block 202 and then flows through cylinder head 204 such that it flows from a lower portion to an upper portion of engine 200.

In the present embodiment, electric water pump 600 is not particularly limited as long as it is a pump operated by receiving supply of electric power. For example, electric water pump 600 is driven by an electric motor or the like. Electric water pump 600 has its flow rate controlled in accordance with a control signal received from ECU 100. Specifically, ECU 100 controls electric power to be supplied to electric water pump 600. The cooling water, which has been supplied from electric water pump 600 to engine 200, flows through medium paths 806 and 808, and is then supplied to radiator 500, thermostat 700, and heater core 300 of an air conditioner (not shown).

Radiator 500 causes heat exchange between the cooling water and outside air to cool the cooling water. If a temperature of the cooling water is higher than a predetermined temperature, thermostat 700 allows the cooling water to flow from radiator 500 to electric water pump 600. In other words, if a temperature of the cooling water is higher than a predetermined temperature, thermostat 700 allows the cooling water to be supplied to radiator 500. Thermostat 700 may be a mechanical valve, or an electric valve (solenoid valve). Heater core 300 causes heat exchange between the cooling water and air in a vehicle chamber to warm the air. The air warmed at heater core 300 is utilized for heating of the vehicle chamber, and the like. In other words, if the heater is requested to operate, air is delivered to heater core 300 to be brought into contact with the same, so that the air warmed at heater core 300 is delivered to the vehicle chamber.

The cooling water, which has flowed through cylinder block 202 and cylinder head 204, flows through a medium path 800 to be supplied to thermostat 700, flows through a medium path 802 to be supplied to radiator 500, and flows through a medium path 804 to be supplied to heater core 300.

Cylinder block 202 is provided with a water temperature sensor 900. Water temperature sensor 900 senses a temperature of the cooling water flowing through medium path 806 in cylinder block 202. Water temperature sensor 900 transmits to ECU 100 a signal representing a sensed temperature of the cooling water. Note that water temperature sensor 900 may be provided midway of medium path 808.

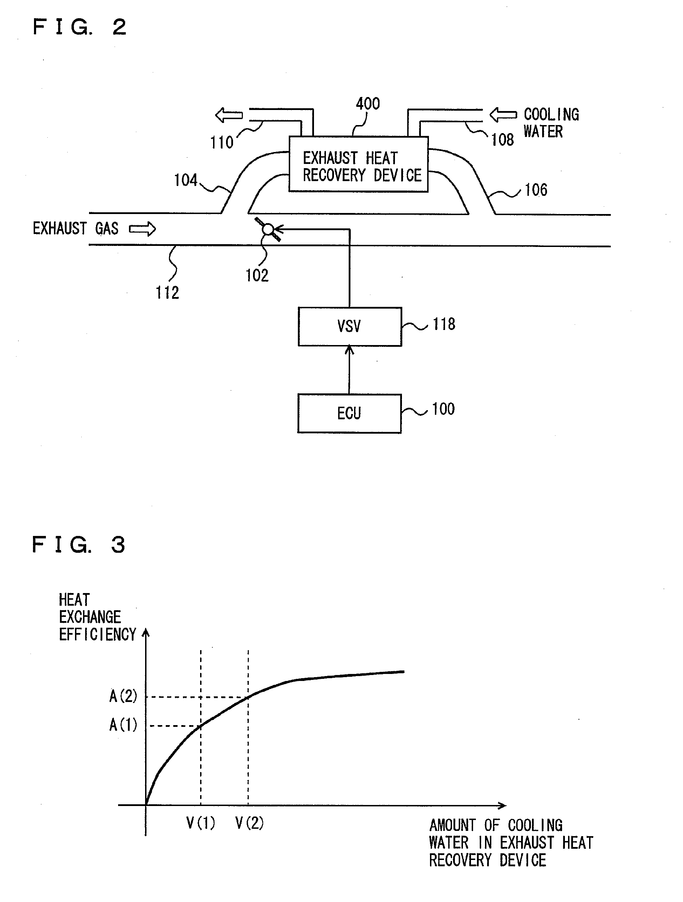

As shown in Fig. 2, an exhaust manifold 112 allowing exhaust gas to flow therethrough is provided with bypass paths 104 and 106 connected in parallel with exhaust manifold 112, exhaust heat recovery device 400 provided between bypass paths 104 and 106, and a selector valve 102 provided midway of exhaust manifold 112.

Selector valve 102 is provided at exhaust manifold 112 at a position located after a branch between exhaust manifold 112 and bypass path 104, and before a junction between exhaust manifold 112 and bypass path 106. When selector valve 102 is closed, it blocks the manifold. At this time, the exhaust gas to be flow through exhaust manifold 112 flows through bypass path 104. After the exhaust gas passes through exhaust heat recovery device 400, it passes through bypass path 106, and then flows into exhaust manifold 112 again. Exhaust manifold 112 has a structure that prevents the exhaust gas from flowing toward the side of bypass path 104 when selector valve 102 is opened. For example, exhaust manifold 112 may have a structure in which the manifold on the side of bypass path 104 is closed when selector valve 102 is opened, or a structure in which a cross-sectional area of bypass path 104 is made small to increase air-flow resistance so that the exhaust gas is encouraged to flow through exhaust manifold 112 when selector valve 102 is opened. However, exhaust manifold 112 is not particularly limited to these structures.

Selector valve 102 is operated by means of a Vacuum Switching Valve (VSV) 118. ECU 100 controls an operation of the VSV, so that open and close states of selector valve 102 are controlled. An actuator may be used instead of the VSV.

Exhaust heat recovery device 400 is configured with a heat exchanger (not shown) and a medium path allowing a medium to flow through the heat exchanger. The medium path includes an upstream-side path 108 introducing the medium into the heat exchanger, and a downstream-side path 110 ejecting the medium from the heat exchanger. Upstream-side path 108 is connected to a downstream side of heater core 300. Downstream-side path 110 is connected to an upstream side of electric water pump 600. At an early stage of warming up when engine 200 is started, ECU 100 provides control such that selector valve 102 is closed. Specifically, when a temperature of the cooling water sensed by water temperature sensor 900 is not higher than a predetermined temperature, ECU 100 provides control such that selector valve 102 is closed. When selector valve 102 is closed, the exhaust gas flows through bypass path 104 so that thermal energy of the exhaust gas is recovered at exhaust heat recovery device 400 serving as a heat exchanger. Specifically, the exhaust gas is brought into contact with exhaust heat recovery device 400, so that heat exchange occurs between the exhaust gas and the exhaust heat recovery device. This results in temperature rise of the cooling medium flowing through the exhaust heat recovery device.

The flow rate of the cooling medium flowing through exhaust heat recovery device 400 and heat exchange efficiency between the cooling medium and the exhaust gas has a relation as shown in Fig. 3.

As shown in Fig. 3, an axis of abscissas represents a flow rate of the cooling medium at exhaust heat recovery device 400, while an axis of ordinates represents heat exchange efficiency. Although heat exchange efficiency increases as the flow rate of the cooling medium increases, an increment of heat exchange efficiency decreases as the flow rate of the cooling medium increases. In other words, heat exchange efficiency converges to a certain value.

In the cooling device for the engine configured as such, assume the case where the heater is requested to operate when engine 200 is started in a cold state. It is necessary to promptly raise the temperature of the cooling medium to ensure heater performance. However, if electric water pump 600 is rotated at a maximum number of revolutions, for example, the low-temperature cooling medium flows after cold start, so that thermal energy generated by combustion of engine 200 is transmitted to the flowing cooling medium. Consequently, there arises a problem of difficulty in raising the temperature of engine 200. Engine 200 at a low temperature causes unstable combustion, which may deteriorate fuel economy. In contrast, assume the case where water pump 600 is stopped or rotated at a minimum number of revolutions, when the heater is requested to operate, to place high priority on warming up of the engine. The temperature of the cooling medium at heater core 300 is difficult to rise, which may fail to ensure heater performance.

Furthermore, the flow rate produced by electric water pump 600 is not proportional to heat exchange efficiency at exhaust heat recovery device 400. Accordingly, if electric water pump 600 is rotated at a maximum number of revolutions, fuel economy may be deteriorated owing to, for example, increase in power consumption.

The present embodiment is characterized in that ECU 100 sets a flow rate of the cooling medium to a set flow rate based on a relation between heat exchange efficiency at a heat exchanger such as exhaust heat recovery device 400, and electric power at electric water pump 600, which electric power corresponds to the flow rate of the cooling medium, and controls the electric power to be supplied to electric water pump 600 such that the set flow rate of cooling medium flows. A program executed by ECU 100 implements the cooling device for the engine according to the present embodiment.

Specifically, when the heater is requested to operate after cold start of engine 200, ECU 100 sets the flow rate to the highest one of a flow rate requested at engine 200, a flow rate requested at heater core 300, and a flow rate requested at exhaust heat recovery device 400.

Here, the "flow rate requested at engine 200" refers to a flow rate required for the temperature of engine 200 to fall within a predetermined range. The temperature of engine 200 may be estimated based on, for example, the temperature of the cooling medium in medium path 806, which is sensed by water temperature sensor 900.

The "flow rate requested at heater core 300" refers to a minimum flow rate that satisfies heater performance requirements. The flow rate required for ensuring minimum heater performance is adapted by experiments or the like. The "flow rate requested at exhaust heat recovery device 400" refers to a flow rate capable of ensuring required heat efficiency while suppressing increase in power consumption by electric water pump 600, based on a relation between heat exchange efficiency and a flow rate as shown in Fig. 3 (e.g. a flow rate falling within a range V(1)-V(2) corresponding to a range A(0)-A(1) of heat exchange efficiency). ECU 100 controls electric power to be supplied to electric water pump 600 such that the set flow rate of cooling medium flows.

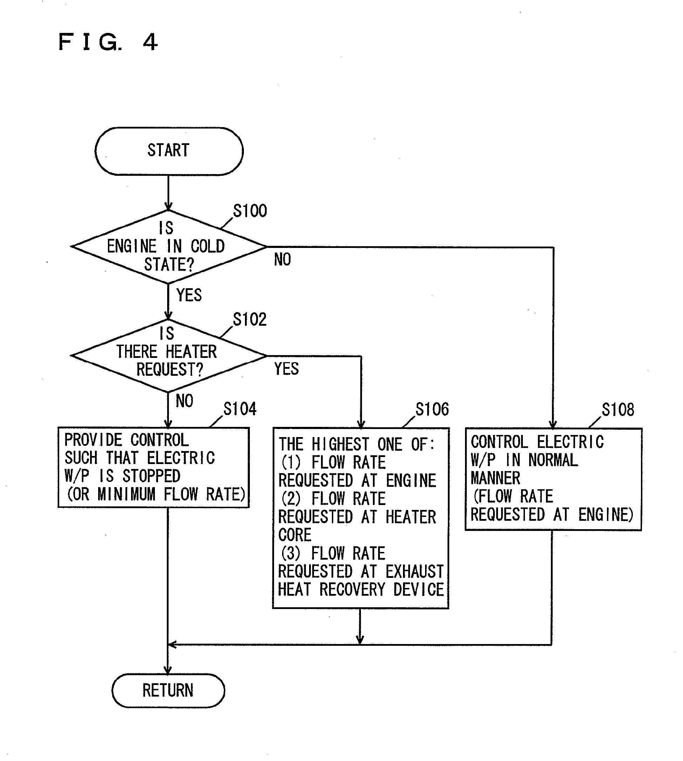

Referring to Fig. 4, there is described a control structure of a program executed by ECU 100 in the cooling device for the engine according to the present embodiment.

In step (hereinafter abbreviated as S) 100, ECU 100 determines whether or not engine 200 is in a cold state. When the temperature of the cooling medium is not higher than a predetermined temperature, ECU 100 may determine that engine 200 is in a cold state. Alternatively, when a predetermined period of time does not pass after engine 200 is started, ECU 100 may determine that engine 200 is in a cold state. Alternatively, when the temperature of engine 200 itself, which is estimated based on the temperature of the cooling medium sensed by water temperature sensor 900, is not higher than a predetermined temperature, ECU 100 may determine that engine 200 is in a cold state. A well-known technique may be used for estimating engine 200 itself, and the detailed description thereof will not be made. If engine 200 is in a cold state (YES in S100), the process proceeds to S 102. If not so (NO in S100), the process proceeds to S108.

In S102, ECU 100 determines whether or not the heater is requested to operate. When ECU 100 senses that a driver performs manipulation that corresponds to an operation of the heater, ECU 100 may determine that the heater is requested to operate. Alternatively, when an automatic air conditioner (not shown) provides control to raise the temperature inside the vehicle chamber, ECU 100 may determine that the heater is requested to operate. If the heater is requested to operate (YES in S102), the process proceeds to S 106. If not so (NO in S102), the process proceeds to S 104.

In S104, ECU 100 controls electric power such that electric water pump 600 is stopped. In the present embodiment, ECU 100 sets the flow rate such that the cooling medium is prevented from flowing. However, the present embodiment is not particularly limited thereto. For example, ECU 100 may control electric power such that a minimum flow rate is selected from predetermined flow rates falling within a set range.

In S106, ECU 100 sets the flow rate to the highest one of: (1) a flow rate requested at engine 200, (2) a flow rate requested at heater core 300, and (3) a flow rate requested at exhaust heat recovery device 400. The requested flow rates (1)-(3) are as described above, and hence the detailed description thereof will not be repeated. ECU 100 controls electric power to be supplied to electric water pump 600 such that the set flow rate is obtained.

In S 108, ECU 100 controls electric water pump 600 in a normal manner. In other words, ECU 100 controls electric power to be supplied to electric water pump 600 such that the flow rate requested at engine 200 is obtained. At this time, ECU 100 controls electric water pump 600 such that the temperature of engine 200 falls within a predetermined range.

There will be described an operation of ECU 100 according to the present embodiment, which operation is based on the configuration and flowchart described above.

If a temperature of the cooling medium is lower than a predetermined temperature when the driver turns on an ignition key to start engine 200 (YES in S100), selector valve 102 is switched such that exhaust gas is introduced into exhaust heat recovery device 400. When the exhaust gas is introduced into exhaust heat recovery device 400, heat of the exhaust gas raises the temperature of the cooling medium in exhaust heat recovery device 400. At this time, if the heater is not requested to operate (NO in S102), electric power is controlled such that electric water pump 600 is stopped (S104). The cooling medium in the medium path in engine 200 does not flow, and hence heat generated by an operation of engine 200, along with the cooling medium in engine 200, raises the temperature of engine 200 itself.

In contrast, if the temperature of the cooling medium is lower than the predetermined temperature (YES in S100), and if the heater is requested to operate (YES in S102), the flow rate is set to the highest one of the flow rate requested at engine 200, the flow rate requested at heater core 300, and the flow rate requested at exhaust heat recovery device 400. Electric power to be supplied to electric water pump 600 is then controlled such that the flow rate set by ECU 100 is obtained (S106). At this time, the flow rate is set to at least a minimum flow rate that satisfies heater performance requirements, and hence heater performance is not deteriorated by an insufficient flow rate.

If the temperature of the cooling medium is higher than the predetermined temperature when the driver starts engine 200 (NO in S100), selector valve 102 is not switched, so that the exhaust gas is not introduced into exhaust heat recovery device 400. At this time, electric power to be supplied to electric water pump 600 is controlled such that the cooling medium flows at the flow rate requested at engine 200, namely, at a flow rate required for the temperature of engine 200 to fall within the predetermined range (S108).

As described above, in the cooling device for the engine according to the present embodiment, the ECU sets the flow rate to a flow rate capable of ensuring heat exchange efficiency required at the exhaust heat recovery device while suppressing increase in power consumption, based on the relation between heat exchange efficiency at the exhaust heat recovery device and electric power at the electric water pump. It is thereby possible to suppress deterioration in fuel economy due to increase in power consumption, and performance deterioration of the exhaust heat recovery device due to deterioration in heat exchange efficiency caused by an insufficient flow rate. Accordingly, it is possible to provide a cooling device for an engine, which cooling device simultaneously suppresses deterioration in fuel economy of the engine, and provides an efficient flow rate of a cooling medium for the engine at the heat exchanger through which the cooling medium flows.

If the heater is requested to operate, the flow rate is set to the highest one of the flow rate requested at the heater core, the flow rate requested at the engine, and the flow rate requested at the exhaust heat recovery device. Accordingly, when the heater is requested to operate, the flow rate is set to at least a minimum flow rate that satisfies heater performance requirements, so that it is possible to encourage warming up of the engine while suppressing deterioration in heater performance. Furthermore, if the engine is not in the cold state, the ECU sets the flow rate requested in accordance with the operation of the engine. It is therefore possible to properly maintain the temperature of the engine.

The description has been made on the understanding that a driver starts the engine in a vehicle on which the cooling device for the engine according to the present embodiment is mounted. However, the embodiment is not particularly limited thereto, as long as the vehicle is an engine-mounted vehicle. For example, the vehicle may be a hybrid vehicle or an idling stop vehicle, and engine 200 may be started when a predetermined start condition is established.

### <Second Embodiment>

A cooling device for an engine according to a second embodiment of the present invention will hereinafter be described. The cooling device for the engine according to the present embodiment is different from the cooling device for the engine according to the first embodiment above, in terms of a control structure of the program executed by ECU 100. Other configurations are similar to those of the cooling device for the engine according to the first embodiment above. These configurations are provided with the same reference characters and have the same functions. Accordingly, the detailed description thereof will not be repeated here.

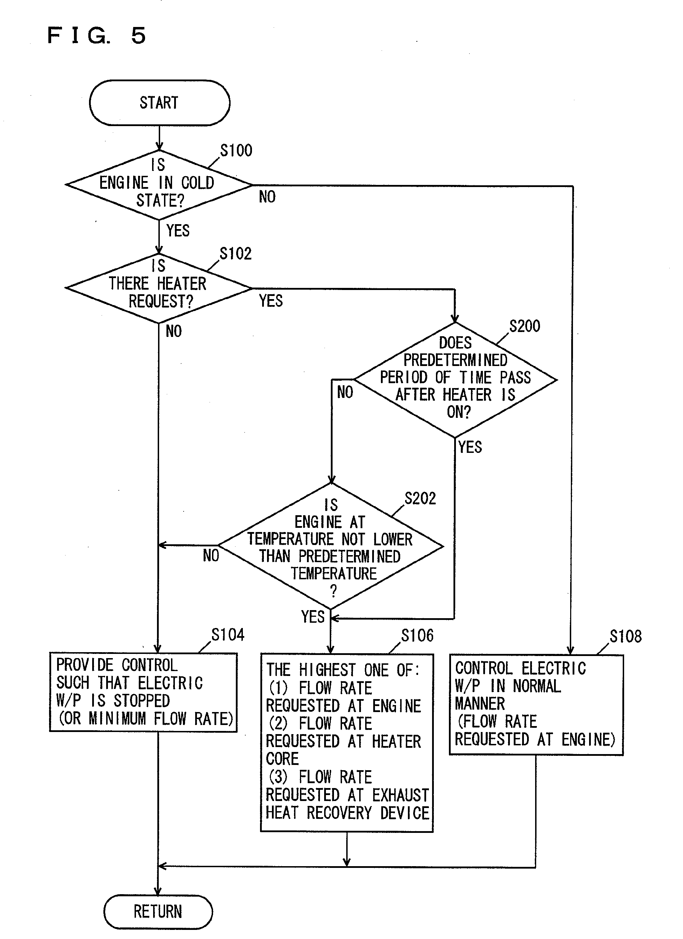

Referring to Fig. 5, there is described a control structure of the program executed by ECU 100 in the cooling device for the engine according to the present embodiment. In the flowchart shown in Fig. 5, the same process as that in the flowchart shown in Fig. 4 described above is provided with the same step number. These processes have the same procedures. Accordingly, the detailed description thereof will not be repeated here.

If the heater is requested to operate (YES in S 102), in other words, if the heater is turned on, ECU 100 determines in S200 whether or not a predetermined period of time passes after the heater is turned on. If the predetermined period of time passes after the heater is turned on (YES in S200), the process proceeds to S106. If not so (NO in S200), the process proceeds to S202.

In S202, ECU 100 determines whether or not the temperature of engine 200 is not lower than a predetermined temperature. ECU 100 may determine whether or not the temperature of the cooling medium flowing through engine 200, which temperature is sensed by water temperature sensor 900, is not lower than the predetermined temperature. If the temperature of engine 200 is not lower than the predetermined temperature (YES in S202), the process proceeds to S106. If not so (NO in S202), the process proceeds to S 104.

There will be described an operation of ECU 100 in the present embodiment, which operation is based on the structure and flowchart described above.

If the temperature of the cooling medium is lower than the predetermined temperature when the driver turns on an ignition key to start engine 200 (YES in S 100), selector valve 102 is switched such that the exhaust gas is introduced into exhaust heat recovery device 400. When the exhaust gas is introduced into exhaust heat recovery device 400, heat of the exhaust gas raises the temperature of the cooling medium in exhaust heat recovery device 400.

At this time, when the heater is not requested to operate (NO in S 102), electric power is controlled such that electric water pump 600 is stopped (S 104). The cooling medium in the medium path in engine 200 does not flow, and hence heat generated by the operation of engine 200, along with the cooling medium in engine 200, raises the temperature of engine 200 itself.

In contrast, assume the case where the temperature of the cooling medium is lower than the predetermined temperature (YES in S 100), and the heater is requested to operate (YES in S 102). Regardless of whether the predetermined period of time passes (YES in S200), or the predetermined period of time does not pass (NO in S200), if the temperature of engine 200 is not lower than the predetermined temperature (YES in S202), the flow rate is set to the highest one of a flow rate requested at engine 200, a flow rate requested at heater core 300, and a flow rate requested at exhaust heat recovery device 400. Electric power to be supplied to electric water pump 600 is then controlled such that the flow rate set by ECU 100 is obtained (S106). At this time, the flow rate is set to at least a minimum flow rate that satisfies heater performance requirements, and hence heater performance is not deteriorated owing to an insufficient flow rate.

Even in the case where the heater is requested to operate (YES in S 102), if the predetermined period of time does not pass (NO in S200), and if the temperature of engine 200 is not equal to or higher than the predetermined temperature (NO in S202), electric power is controlled such that electric water pump 600 is stopped (S 104).

If the temperature of the cooling medium is higher than the predetermined temperature (NO in S 100) when the driver starts engine 200, selector valve 102 is not switched, so that the exhaust gas is not introduced into exhaust heat recovery device 400. At this time, electric power to be supplied to electric water pump 600 is controlled such that the cooling medium flows at the flow rate requested at engine 200, namely, a flow rate required for the temperature of engine 200 to fall within a predetermined range (S108).

As described above, in the cooling device for the engine according to the present embodiment, the effect produced by the cooling device for the engine according to the first embodiment described above is exhibited, and additionally, the flow rate is controlled such that the cooling medium is prevented from circulating through the medium path until the predetermined period of time passes after the heater is requested to operate after the cold start of the engine. Accordingly, the temperature of the engine itself can be raised promptly. It is therefore possible to place high priority on warming up of the engine until the predetermined period of time passes after the heater is turned on. Accordingly, the temperature of the engine itself can be raised promptly, which can suppress deterioration in fuel economy.

### <Third Embodiment>

A cooling device for an engine according to a third embodiment of the present invention will hereinafter be described. The cooling device for the engine according to the present embodiment is different from the cooling device for the engine according to the first embodiment above, in terms of a control structure of the program executed by ECU 100. Other configurations are similar to those of the cooling device for the engine according to the first embodiment above. These configurations are provided with the same reference characters, and have the same functions. Accordingly, the detailed description thereof will not be repeated here.

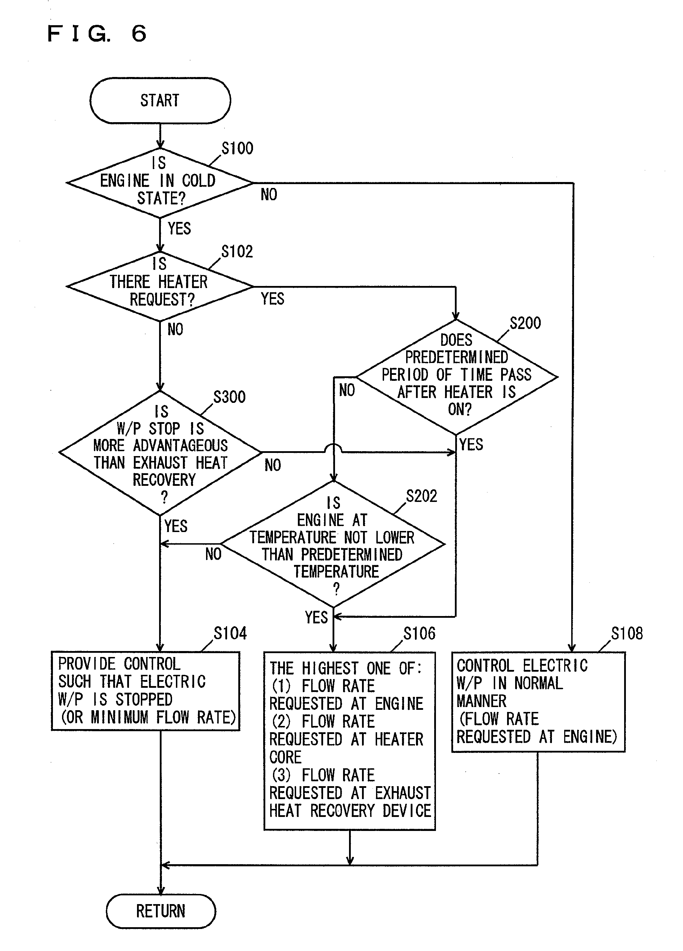

Referring to Fig. 6, there is described a control structure of the program executed by ECU 100 in the cooling device for the engine according to the present embodiment. In the flowchart shown in Fig. 6, the same process as that shown in the flowchart shown in Fig. 5 described above is provided with the same step number. These processes have the same procedures. Accordingly, the detailed description thereof will not be repeated here.

If the heater is not requested to operate (NO in S102), ECU 100 determines in S300 whether or not stoppage of electric water pump 600 is advantageous, based on a comparison result between an exhaust heat recovery state and a warm-up state of engine 200 caused by stoppage of electric water pump 600. Determination as to whether or not stoppage of electric water pump 600 is advantageous is made, for example, from the viewpoint whether an exhaust heat recovery state when engine 200 rotates at an idle revolution number (e.g. an amount of recovered heat) or a warm-up state of engine 200 (e.g. a temperature of engine 200) is more advantageous in terms of efficiency or fuel economy, based on comparison therebetween. ECU 100 may determine whether the exhaust heat recovery state during idle rotation or the warm-up state of engine 200 is more advantageous, by, for example, storing relations between an amount of recovered heat and a temperature of engine 200 (or a temperature of the cooling medium in engine 200) in the form of a map or the like through experiments and others, and setting therein a region where exhaust heat recovery is more advantageous, and a region where warming up of the engine is more advantageous. In other words, ECU 100 may determine whether the number of revolutions of engine 200 sensed by an engine revolution number sensor (not shown) and the temperature of engine 200 based on the temperature sensed by water temperature sensor 900 fall in the region where exhaust heat recovery is more advantageous, or the region where warming up of the engine is more advantageous. If it is determined that stoppage of electric water pump 600 is advantageous (YES in S300), the process proceeds to S104. If not so (NO in S300), the process proceeds to S 106.

There is described an operation of ECU 100 in the present embodiment, which operation is based on the structure and flowchart described above.

If the temperature of the cooling medium is lower than the predetermined temperature when the driver turns on an ignition key to start engine 200 (YES in S 100), selector valve 102 is switched such that the exhaust gas is introduced into exhaust heat recovery device 400. When the exhaust gas is introduced into exhaust heat recovery device 400, heat of the exhaust gas raises the temperature of the cooling medium in exhaust heat recovery device 400.

At this time, in the case where the heater is not requested to operate (NO in S102), if it is determined that stoppage of electric water pump 600 is advantageous based on the exhaust heat recovery state of exhaust heat recovery device 400 (an amount of recovered heat during idle rotation) and the warm-up state of engine 200 (a temperature of engine 200) (YES in S300), electric power is controlled such that electric water pump 600 is stopped (S104). The cooling medium in the medium path in engine 200 does not flow, and hence heat generated by the operation of engine 200, along with the cooling medium in engine 200, raises the temperature of engine 200 itself.

If it is determined that stoppage of electric water pump 600 is not advantageous (NO in S300), the flow rate is set to the highest one of a flow rate requested at engine 200, a flow rate requested at heater core 300, and a flow rate requested at exhaust heat recovery device 400. At this time, the heater is not requested to operate, and hence ECU 100 sets the flow rate to the higher one of the flow rate requested at engine 200 and the flow rate requested at exhaust heat recovery device 400. Electric power to be supplied to electric water pump 600 is then controlled such that the flow rate set by ECU 100 is obtained (S106). The cooling medium flows through the medium path, so that the temperature of the cooling medium is raised by heat recovered at exhaust heat recovery device 400 and heat generated by the operation of engine 200.

In contrast, assume the case where the temperature of the cooling medium is lower than the predetermined temperature (YES in S 100), and the heater is requested to operate (YES in S 102). Regardless of whether the predetermined period of time passes (YES in S200), or the predetermined period of time does not pass (NO in S200), if the temperature of engine 200 is not lower than the predetermined temperature (YES in S202), the flow rate is set to the highest one of the flow rate requested at engine 200, the flow rate requested at heater core 300, and the flow rate requested at exhaust heat recovery device 400. Electric power to be supplied to electric water pump 600 is then controlled such that the flow rate set by ECU 100 is obtained (S106). At this time, the flow rate is set to at least a minimum flow rate that satisfies heater performance requirements, and hence heater performance is not deteriorated owing to an insufficient flow rate.

Even in the case where the heater is requested to operate (YES in S 102), if the predetermined period of time does not pass (NO in S200), and the temperature of engine 200 is not equal to or higher than the predetermined temperature (NO in S202), electric power is controlled such that electric water pump 600 is stopped (S 104).

If the temperature of the cooling medium is higher than the predetermined temperature when the driver starts engine 200 (NO in S 100), selector valve 102 is not switched, so that the exhaust gas is not introduced into exhaust heat recovery device 400. At this time, electric power to be supplied to electric water pump 600 is controlled such that the cooling medium flows at the flow rate requested at engine 200, namely, a flow rate required for the temperature of engine 200 to fall within a predetermined range (S108).

As described above, in the cooling device for the engine according to the present embodiment, the effect produced by the cooling device for the engine according to the second embodiment described above is exhibited, and additionally, the ECU determines whether warming up of the engine or exhaust heat recovery is more advantageous in terms of efficiency or fuel economy, based on a relation between the temperature of the engine itself in a cold state and an amount of recovered heat. Accordingly, if warming up of the engine is determined to be more advantageous, a flow of the cooling medium is stopped, which makes it possible to promptly raise the temperature of the engine itself. If exhaust heat recovery is determined to be more advantageous, the cooling medium is allowed to flow at a flow rate that enables efficient exhaust heat recovery, which makes it possible to efficiently raise the temperature of the cooling medium. In other words, the flow rate is set to a flow rate in accordance with the warm-up state of the engine and the exhaust heat recovery state, which enables efficient warming up. Accordingly, it is possible to provide a cooling device for an engine, which cooling device simultaneously suppresses deterioration in fuel economy of the engine, and provides an efficient flow rate of the cooling medium for the engine at the heat exchanger through which the cooling medium flows.

It should be understood that the embodiments disclosed herein are illustrative and not limitative in all aspects. The scope of the present invention is shown not by the description above but by the scope of the claims, and is intended to include all modifications within the equivalent meaning and scope of the claims.

## Claims

1. A cooling device adjusting a temperature of an engine (200), said engine (200) being provided with a medium path (806, 808) allowing a cooling medium to flow therethrough, and said medium path (806, 808) being connected to a heat exchanger (500) causing heat exchange with said cooling medium, comprising:
a circulation unit (600) circulating said cooling medium by receiving supply of electric power; and
a control unit (100) controlling the electric power to be supplied to said circulation unit (600), wherein
said control unit (100) includes
a setting unit setting a flow rate of said cooling medium to a set flow rate, in a cold state of said engine (200), based on a relation between heat exchange efficiency at said heat exchanger (500) and the electric power at said circulation unit (600), the electric power corresponding to said flow rate, and
an electric power control unit controlling said electric power such that said set flow rate is obtained.

2. A cooling device adjusting a temperature of an engine (200), said engine (200) being provided with a medium path (806, 808) allowing a cooling medium to flow therethrough, and said medium path (806, 808) being connected to an exhaust heat recovery device (400) provided at an exhaust manifold (112) of said engine (200) for recovering exhaust heat through heat exchange between exhaust gas of said engine (200) and said cooling medium, comprising:
a circulation unit (600) circulating said cooling medium by receiving supply of electric power; and
a control unit (100) controlling the electric power to be supplied to said circulation unit (600), wherein
said control unit (100) includes
a setting unit setting a flow rate of said cooling medium to a set flow rate, in a cold state of said engine (200), based on a relation between heat exchange efficiency at said exhaust heat recovery device (400) and the electric power at said circulation unit (600), the electric power corresponding to said flow rate, and
an electric power control unit controlling said electric power such that said set flow rate is obtained.

3. The cooling device for the engine according to claim 2, wherein
said medium path (806, 808) is connected to a heater core (300) causing heat exchange between air in a vehicle chamber and said cooling medium, and
if a heater is requested to operate, said control unit (100) sets said flow rate to the higher one of a flow rate requested at said heater core (300) and a flow rate requested in the cold state of said engine (200).

4. The cooling device for the engine according to claim 3, wherein said control unit (100) controls said flow rate such that said cooling medium is prevented from circulating through said medium path (806, 808) until a predetermined period of time passes after said heater is requested to operate.

5. A cooling device adjusting a temperature of an engine (200), said engine (200) being provided with a medium path (806, 808) allowing a cooling medium to flow therethrough, and said medium path (806, 808) being connected to an exhaust heat recovery device (400) provided at an exhaust manifold (112) of said engine (200) for recovering exhaust heat through heat exchange between exhaust gas of said engine (200) and said cooling medium, comprising:
a circulation unit (600) circulating said cooling medium; and
a control unit (100) for controlling a flow rate of the cooling medium circulated by said circulation unit (600), wherein
said control unit (100) includes
a setting unit setting said flow rate to a set flow rate, in a cold state of said engine (200), based on a comparison result between a warm-up state of said engine (200) and an exhaust heat recovery state of said exhaust heat recovery device (400), and
a flow rate control unit controlling said flow rate such that said set flow rate is obtained.

6. The cooling device for the engine according to claim 5, wherein
said medium path (806, 808) is connected to a heater core (300) causing heat exchange between air in a vehicle chamber and said cooling medium, and
if a heater is requested to operate, said control unit (100) sets said flow rate to the higher one of a flow rate requested at said heater core (300) and a flow rate requested in the cold state of said engine (200).

7. The cooling device for the engine according to claim 6, wherein said control unit (100) controls said flow rate such that said cooling medium is prevented from circulating through said medium path (806, 808) until a predetermined period of time passes after said heater is requested to operate.

8. The cooling device for the engine according to any of claims 1-7, wherein, if said engine (200) is not in the cold state, said setting unit sets said flow rate to a flow rate requested in accordance with an operation of said engine (200).

9. A cooling device adjusting a temperature of an engine (200), said engine (200) being provided with a medium path (806, 808) allowing a cooling medium to flow therethrough, and said medium path (806, 808) being connected to a heat exchanger (500) causing heat exchange with said cooling medium, comprising:
circulation means (600) for circulating said cooling medium by receiving supply of electric power; and
control means (100) for controlling the electric power to be supplied to said circulation means (600), wherein
said control means (100) includes
setting means for setting a flow rate of said cooling medium to a set flow rate, in a cold state of said engine (200), based on a relation between heat exchange efficiency at said heat exchanger (500) and the electric power at said circulation means (600), the electric power corresponding to said flow rate, and
means for controlling said electric power such that said set flow rate is obtained.

10. A cooling device adjusting a temperature of an engine (200), said engine (200) being provided with a medium path (806, 808) allowing a cooling medium to flow therethrough, and said medium path (806, 808) being connected to an exhaust heat recovery device (400) provided at an exhaust manifold (112) of said engine (200) for recovering exhaust heat through heat exchange between exhaust gas of said engine (200) and said cooling medium, comprising:
circulation means (600) for circulating said cooling medium by receiving supply of electric power; and
control means (100) for controlling the electric power to be supplied to said circulation means (600), wherein
said control means (100) includes
setting means for setting a flow rate of said cooling medium to a set flow rate, in a cold state of said engine (200), based on a relation between heat exchange efficiency at said exhaust heat recovery device (400) and the electric power at said circulation means (600), the electric power corresponding to said flow rate, and
means for controlling said electric power such that said set flow rate is obtained.

11. The cooling device for the engine according to claim 10, wherein
said medium path (806, 808) is connected to a heater core (300) causing heat exchange between air in a vehicle chamber and said cooling medium, and
said control means (100) includes means for setting said flow rate to the higher one of a flow rate requested at said heater core (300) and a flow rate requested in the cold state of said engine (200) if a heater is requested to operate.

12. The cooling device for the engine according to claim 11, wherein said control means (100) further includes means for controlling said flow rate such that said cooling medium is prevented from circulating through said medium path (806, 808) until a predetermined period of time passes after said heater is requested to operate.

13. A cooling device adjusting a temperature of an engine (200), said engine (200) being provided with a medium path (806, 808) allowing a cooling medium to flow therethrough, and said medium path (806, 808) being connected to an exhaust heat recovery device (400) provided at an exhaust manifold (112) of said engine (200) for recovering exhaust heat through heat exchange between exhaust gas of said engine (200) and said cooling medium, comprising:
circulation means (600) for circulating said cooling medium; and
control means (100) for controlling a flow rate of the cooling medium circulated by said circulation means (600), wherein
said control means (100) includes
setting means for setting said flow rate to a set flow rate, in a cold state of said engine (200), based on a comparison result between a warm-up state of said engine (200) and an exhaust heat recovery state of said exhaust heat recovery device (400), and
means for controlling said flow rate such that said set flow rate is obtained.

14. The cooling device for the engine according to claim 13, wherein
said medium path (806, 808) is connected to a heater core (300) causing heat exchange between air in a vehicle chamber and said cooling medium, and
said control means (100) includes means for setting said flow rate to the higher one of a flow rate requested at said heater core (300) and a flow rate requested in the cold state of said engine (200) if a heater is requested to operate.

15. The cooling device for the engine according to claim 14, wherein said control means (100) further includes means for controlling said flow rate such that said cooling medium is prevented from circulating through said medium path (806, 808) until a predetermined period of time passes after said heater is requested to operate.

16. The cooling device for the engine according to any of claims 9-15, wherein said setting means includes means for setting said flow rate to a flow rate requested in accordance with an operation of said engine (200) if said engine (200) is not in the cold state.

17. A cooling device adjusting a temperature of an engine (200), said engine (200) being provided with a medium path (806, 808) allowing a cooling medium to flow therethrough, and said medium path (806, 808) being connected to a radiator (500) causing heat exchange with said cooling medium, comprising:
an electric water pump (600) circulating said cooling medium by receiving supply of electric power; and
an electronic control unit (100) controlling the electric power to be supplied to said electric water pump (600), wherein
said electronic control unit (100)
sets a flow rate of said cooling medium to a set flow rate, in a cold state of said engine (200), based on a relation between heat exchange efficiency at said radiator (500) and the electric power at said electric water pump (600), the electric power corresponding to said flow rate, and
controls said electric power such that said set flow rate is obtained.

18. A cooling device adjusting a temperature of an engine (200), said engine (200) being provided with a medium path (806, 808) allowing a cooling medium to flow therethrough, and said medium path (806, 808) being connected to an exhaust heat recovery device (400) provided at an exhaust manifold (112) of said engine (200) for recovering exhaust heat through heat exchange between exhaust gas of said engine (200) and said cooling medium, comprising:
an electric water pump (600) circulating said cooling medium by receiving supply of electric power; and
an electronic control unit (100) controlling the electric power to be supplied to said electric water pump (600), wherein
said electronic control unit (100)
sets a flow rate of said cooling medium to a set flow rate, in a cold state of said engine (200), based on a relation between heat exchange efficiency at said exhaust heat recovery device (400) and the electric power at said electric water pump (600), the electric power corresponding to said flow rate, and
controls said electric power such that said set flow rate is obtained.

19. A cooling device adjusting a temperature of an engine (200), said engine (200) being provided with a medium path (806, 808) allowing a cooling medium to flow therethrough, and said medium path (806, 808) being connected to an exhaust heat recovery device (400) provided at an exhaust manifold (112) of said engine (200) for recovering exhaust heat through heat exchange between exhaust gas of said engine (200) and said cooling medium, comprising:
an electric water pump (600) circulating said cooling medium; and
an electronic control unit (100) for controlling a flow rate of the cooling medium circulated by said electric water pump (600), wherein
said electronic control unit (100)
sets said flow rate to a set flow rate, in a cold state of said engine (200), based on a comparison result between a warm-up state of said engine (200) and an exhaust heat recovery state of said exhaust heat recovery device (400), and
controls said flow rate such that said set flow rate is obtained.
